Europäisches Patentamt

European Patent Office

Office européen des brevets

(19)

(11) Veröffentlichungsnummer : **0 136 436**
**B1**

# (12) EUROPÄISCHE PATENTSCHRIFT

(45) Veröffentlichungstag der Patentschrift :
02.12.87

(21) Anmeldenummer : 84108577.2

(22) Anmeldetag : 20.07.84

(51) Int. Cl.⁴ : **F 15 B 15/08**, F 15 B 15/26,
F 16 D 63/00

(54) Kolbenstangenloser Arbeitszylinder.

(30) Priorität : 05.08.83 DE 3328352

(43) Veröffentlichungstag der Anmeldung :
10.04.85 Patentblatt 85/15

(45) Bekanntmachung des Hinweises auf die Patenterteilung : 02.12.87 Patentblatt 87/49

(84) Benannte Vertragsstaaten :
DE FR GB IT

(56) Entgegenhaltungen :
EP-A- 0 029 188
DE-A- 2 322 038
DE-A- 3 137 141
US-A- 3 362 505

(73) Patentinhaber : ROBERT BOSCH GMBH
Postfach 50
D-7000 Stuttgart 1 (DE)

(72) Erfinder : Oskar, Peter, Dr. Dipl.-Ing.
Frauenstein 26
D-7481 Bingen (DE)

## Beschreibung

Die Erfindung bezieht sich auf einen kolbenstangenlosen Arbeitszylinder mit einer längs des Zylinderrohres verschiebbar angeordneten Kraftabnahme, in die eine fluidbetätigte Bremseinrichtung integriert ist, die einen das Zylinderrohr konzentrisch umfassenden Bremsbelag, eine Bremsbetätigungseinrichtung mit einem gegen die Kraft einer Rückstellfeder wirkend fluidbeaufschlagbaren Balg und einem Übertragungsglied zwischen Betätigungseinrichtung und Bremsbelag aufweist.

Bremseinrichtungen für Arbeitszylinder sind bekannt. So zeigt beispielsweise die DE-A-2 945 133 (EP-A-0 029 188) eine solche Bremseinrichtung, die in die Kraftabnahme des Arbeitszylinders integriert ist und sich am Zylinderrohr abstützt.

Für universellen Einsatz ist eine solche Bremse aus mehreren Gründen nicht geeignet. Dies besonders dann, wenn mittels gezielter, dosierter Druckwegnahme im fluidgesteuerten Bremssystem positioniert werden soll und gleichzeitig bei Druckausfall eine Sicherheitsbremsung möglich sein muß. Beispielsweise ist ein solches Bremssystem für Arbeitszylinder für einen Betrieb mit einem Druck von 6 bar eingerichtet, dieser Betriebsdruck ermöglicht ein einwandfreies Arbeiten bis etwa 5 bar. Bei geringeren Werten setzt die Bremseinrichtung ein und ist bei einem Druck von etwa 1 bar voll wirksam, d. h. es steht die volle Bremswirkung zur Verfügung. Fällt beispielsweise der Druck im Bremssystem auf diesen Wert ab, bedeutet dies einen Störungsfall, und die Bremseinrichtung wird mit voller Bremskraft in ihre Wirkstellung gehen.

Der Erfindung liegt daher die Aufgabe zugrunde, eine Bremseinrichtung für Arbeitszylinder zu schaffen, mit der auch Grenzfälle beherrschbar sind und die bei Druckausfall den Arbeitszylinder anhält und außerdem für das Positionieren desselben geeignet ist.

Erfindungsgemäß wird dies dadurch erreicht, daß als Übertragungsglied ein Seil, Band, eine Kette oder dergleichen vorgesehen ist, das/die in mindestens einer Schlinge um den Bremsbelag geführt und an einer durch die Betätigungseinrichtung quer zur Zylinderlängsachse hin und her bewegbaren Halterung befestigt ist, daß die Betätigungseinrichtung eine an feststehenden Bolzen geführte Zwischenplatte aufweist, mit der die Halterung verbunden ist und daß auf der einen Seite der Zwischenplatte der Balg und auf der anderen Seite die als Tellerfedern ausgebildeten Rückstellfedern angreifen.

Der Vorteil der mit der Erfindung vorgeschlagenen Bremseinrichtung für Arbeitszylinder liegt in deren universellen Einsatzmöglichkeit, wobei sogar Grenzfälle erfaßt werden können. Auch auf benachbarten Gebieten der Technik ist der Erfindungsgegenstand mit Vorteil einsetzbar, so z. B. als Sicherheitseinrichtung an axial bewegten Maschinenteilen, in der Strömungs- und Fördertechnik, an Fahrzeugteilen, in der Automation, etc.

Die Erfindung ist nachstehend anhand eines in den Abbildungen dargestellten Ausführungsbeispieles näher erläutert. Es zeigt:

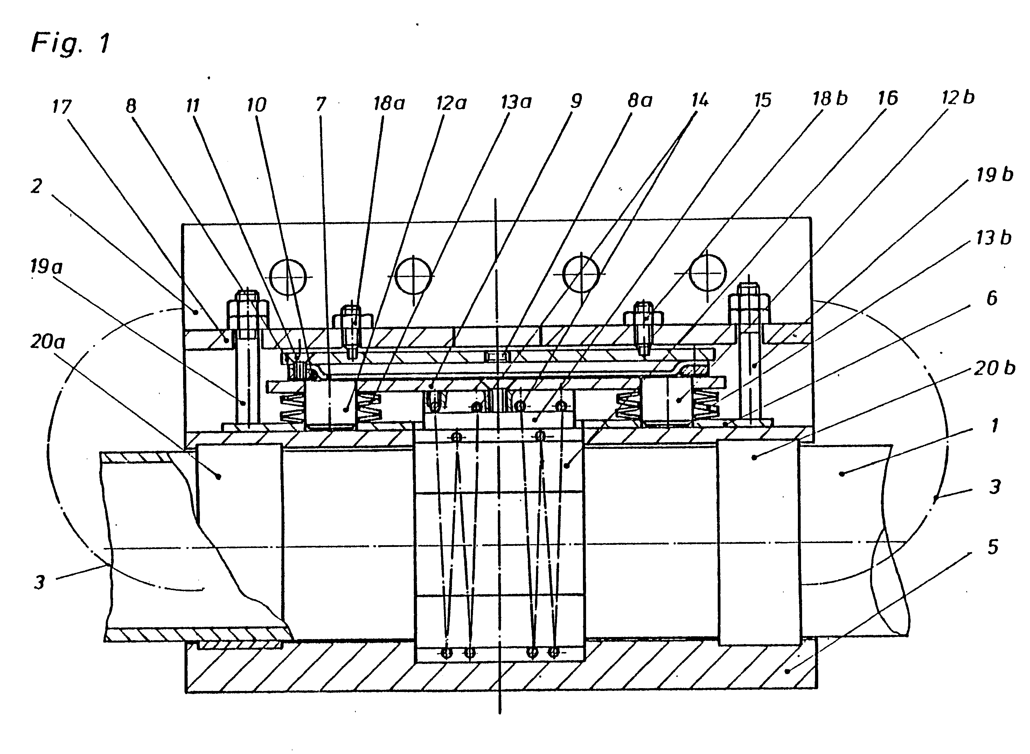

Figur 1 einen Längsschnitt durch den Erfindungsgegenstand und

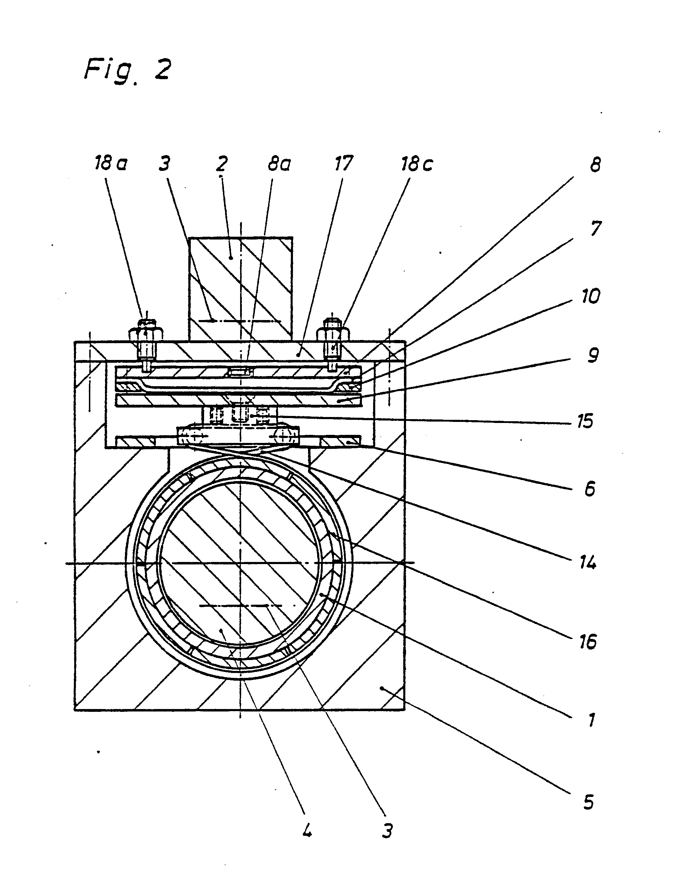

Figur 2 einen Schnitt durch die Figur 1 in Richtung A-A.

Der in den Abbildungen dargestellte Kolbenstangenlose Arbeitszylinder besteht im wesentlichen aus einem Zylinderrohr 1 und einer Kraftabnahme 2, sowie einem Antrieb für diese Kraftabnahme. Als Antriebe und Kraftübertragungsglieder kommen beispielsweise Stahlbänder 3, die am fluidbetätigten Kolben 4 und an der Kraftabnahme 2 eingehängt sind, in Frage. Auch am Kolben 4 befestigte Zapfen etc. sind als Kraftübertragungsglieder üblich, sie dienen ggf. gleichzeitig als Kraftabnahme und ragen durch die Zylinderwand.

Mit 5 ist eine Führungsbuchse bezeichnet, die das Rohr 1 des Arbeitszylinders umfaßt und außer der Kraftabnahme 2 noch eine Grundplatte 6 für die Bremseinrichtung trägt.

Die Bremseinrichtung besteht aus einem fluidbetätigten Balg 7, der sich oben gegen eine Druckplatte 8 und unten gegen eine Zwischenplatte 9 abstützt, wobei auf der Zwischenplatte 9 ein Haltering 10 für den Balg 7 angeordnet ist, der seinerseits mittels Schrauben 11 in seiner Lage fixiert ist. Mit 8a ist der Fluideinlaß in den Balg 7 bezeichnet.

Die Bolzen 12a und 12b sind in der Grundplatte 6 verankert und dienen der Zwischenplatte 9 als Führung, die von über die Bolzen 12a und 12b gezogenen Tellerfedern 13a und 13b nach oben auf den Balg 7 gedrückt wird.

Das Bremsglied 14, 16 besteht vorzugsweise aus einem oder mehreren Drahtseilen 14, die in der Halterung 15 befestigt und um das Zylinderrohr 1 mit mindestens einer Schlinge geführt sind und dem mehrere Bremskörper 16 aufweisenden, das Zylinderrohr 1 konzentrisch umfassenden Bremsbelag. Diese Bremskörper 16 sind außen metallisch belegt, um ein einwandfreies Gleiten z. B. der Drahtseile auf dem Bremskörper zu ermöglichen. Gegen axial wirkende Kräfte sind die in der Führungsbuchse 5 gelagerten Bremskörper 16 wirksam abgestützt. Oberhalb der Druckplatte 8 ist eine Deckplatte 17 vorgesehen, die Justierschrauben 18a und 18b für die Druckplatte 8 enthält. Zum Einregulieren der Vorspannung der Bremseinrichtung sind Schraubbolzen 19a und 19b in der Grundplatte 6 vorgesehen, die die Deckplatte 17 durchdringen. Um ein gutes Gleiten der Kraftabnahme 2 mit ihrer Bremseinrichtung auf dem Zylinderrohr 1 zu gewährleisten, sind zwei Führungsbänder 20a und 20b in der Führungsbuchse 5 angeordnet.

Die Wirkungsweise der erfindungsgemäßen Bremseinrichtung ist wie folgt:

Fällt der Druck in dem mit einem unter Druck stehenden Fluid gefüllten Balg 7 ab, so wird durch die Spannung der Tellerfedern 13a und 13b die Zwischenplatte 9 gegen die Druckplatte 8 gehoben, wodurch das Seil 14 gespannt wird und sich fest um das Zylinderrohr 1 schlingt. Dabei wird der Bremsbelag 16 gegen die Oberfläche des Zylinderrohres 1 gedrückt. Dies hat eine rasch ansprechende und stark wirkende Abbremsung der Bewegung der Kraftabnahme 2 zur Folge. Die Bremseinrichtung kann selbstverständlich auch umgekehrt arbeitend ausgebildet sein, d. h. das Bremsglied 14 geht bei Druckerhöhung im Bremssystem in Wirkstellung.

Beispiel : Beträgt die benötigte Bremskraft beispielsweise 700 N, der Reibungskoeffizients $\rho$ ca. 0,2, so wird eine Anpresskraft von ca. 3 500 N benötigt. Die zugehörige Zugkraft beträgt bei einmaliger Umschlingung des Zylinderrohres ca. 900 N je Seilende (2 Seile). Bei zweimaliger Umschlingung des Zylinderrohres 1 durch die beiden Drahtseile beträgt die benötigte Zugkraft ca. 450 N je Seilende, die Bremskraft, wie gefordert, unter Berücksichtigung der Eigenreibung im System also ca. 700 N, wobei ausreichende Sicherheit gegeben ist.

Die Länge des fluidgetätigten Balges 7 ist bei ca. 5,0 bar Druckbeaufschlagung mit ca. 10 cm und bei einer Breite von 4 cm ausreichend bemessen.

Durch mehrmaliges Umschlingen des Zylinderrohres 1 mit dem Drahtseil 14 oder dergl. kann somit ein sehr großer Bremseffekt bei geringem Druckaufwand erzielt werden.

**Patentansprüche**

1. Kolbenstangenloser Arbeitszylinder mit einer längs des Zylinderrohres (1) verschiebbar angeordneten Kraftabnahme (2), in die eine fluidbetätigte Bremseinrichtung integriert ist, die einen das Zylinderrohr (1) konzentrisch umfassenden Bremsbelag (16), eine Bremsbetätigungseinrichtung mit einem gegen die Kraft einer Rückstellfeder (13a, 13b) wirkend fluidbeaufschlagbaren Balg (7) und einem Übertragungsglied (14) zwischen Betätigungseinrichtung und Bremsbelag (16) aufweist, dadurch gekennzeichnet, daß als Übertragungsglied ein Seil, Band, eine Kette oder dergleichen vorgesehen ist, das/die in mindestens einer Schlinge um den Bremsbelag (16) geführt und an einer durch die Betätigungseinrichtung quer zur Zylinderlängsachse hin und her bewegbaren Halterung (15) befestigt ist, daß die Betätigungseinrichtung eine an feststehenden Bolzen (12a, 12b) geführte Zwischenplatte (9) aufweist, mit der die Halterung (15) verbunden ist und daß auf der einen Seite der Zwischenplatte (9) der Balg (7) und auf der anderen Seite die als Tellerfedern (13a, 13b) ausgebildeten Rückstellfedern angreifen.

2. Kolbenstangenloser Arbeitszylinder nach Anspruch 1, dadurch gekennzeichnet, daß die Tellerfedern (13a, 13b) über die Bolzen (12a, 12b) gezogen sind.

3. Kolbenstangenloser Arbeitszylinder nach Anspruch 1 oder 2, dadurch gekennzeichnet, daß der Balg (7) an einer Druckplatte (8) befestigt ist, die gegenüber der Kraftabnahme (2) mittels Justierschrauben (18a, 18b) einstellbar angeordnet ist.

4. Kolbenstangenloser Arbeitszylinder nach einem der Ansprüche 1 bis 3, dadurch gekennzeichnet, daß die Bolzen (12a, 12b) in einer Grundplatte (6) verankert sind, an der sich die Tellerfedern (13a, 13b) abstützen, und daß die Grundplatte (6) zur Einstellung der Federvorspannung über Schraubbolzen (19a, 19b) innerhalb der Kraftabnahme (2) festlegbar ist.

5. Kolbenstangenloser Arbeitszylinder nach einem der Ansprüche 1 bis 4, dadurch gekennzeichnet, daß die Kraftabnahme (2) eine das Zylinderrohr (1) umfassende Führungsbuchse (5) aufweist, in der zur Verbesserung des Gleitens der Kraftabnahme (2) auf dem Zylinderrohr (1) sich in Umfangsrichtung erstreckende Führungsbänder (20a, 20b) angeordnet sind.

6. Kolbenstangenloser Arbeitszylinder nach einem der Ansprüche 1 bis 5, dadurch gekennzeichnet, daß der Bremsbelag aus mehreren, sich jeweils über einen Teil des Umfangs des Zylinderrohres (1) erstreckenden Bremskörpern (16) zusammengesetzt ist, die auf ihrer Außenseite metallisch belegt sind.

**Claims**

1. Piston-rod-less working cylinder comprising a power take-off (2) which is arranged to be displaceable along the cylinder tube (1) and into which a fluid-actuated braking device is integrated which exhibits a brake lining (16) which concentrically encloses the cylinder tube (1), a brake actuating device with a bellows (7) which can be charged with fluid acting against the force of a restoring spring (13a, 13b) and a transmission element (14) between actuating device and brake lining (16), characterized in that as a transmission element a rope, belt, a chain or similar is provided which is conducted in at least one loop around the brake lining (16) and is attached to a holder (15) which can be moved to and fro transversely to the longitudinal cylinder axis by the actuating device ; in that the actuating device exhibits an intermediate plate (9) which is carried at fixed bolts (12a, 12b) and to which the holder (15) is connected ; and in that the bellows (7) engages one side of the intermediate plate (9) and the restoring springs constructed as cup springs (13a, 13b) engage the other side.

2. Piston-rod-less working cylinder according to Claim 1, characterized in that the cup springs (13a, 13b) are pulled over the bolts (12a, 12b).

3. Piston-rod-less working cylinder according to claim 1 or 2, characterized in that the bellows (7) is attached to a pressure plate (8) which, by means of adjusting screws (18a, 18b), is arranged to be adjustable with respect to the power take-off (2).

4. Piston-rod-less working cylinder according to one of Claims 1 to 3, characterized in that the bolts (12a, 12b) are anchored in a base plate (6) at which the cup springs (13a, 13b) are supported, and in that the base plate (6) can be positioned within the power take-off (2) for adjusting the spring pre-tension via screw bolts (19a, 19b).

5. Piston-rod-less working cylinder according to one of Claims 1 to 4, characterized in that the power take-off (2) exhibits a guide bush (5) which encloses the cylinder tube (1) and in which guide belts (20a, 20b) extending in the peripheral direction are arranged in order to improve the sliding of the power take-off (2) on the cylinder tube (1).

6. Piston-rod-less working cylinder according to one of Claims 1 to 5, characterized in that the brake lining is composed of several brake bodies (16) which in each case extend over a part of the circumference of the cylinder tube (1) and which are metallically covered on their outside.

## Revendications

1. Cylindre actionneur sans tige de piston avec une prise de force (2) mobile disposée le long du tube cylindrique (1), dans laquelle est intégré un dispositif de freinage actionné par un fluide, qui possède une garniture de frein (16) entourant concentriquement le tube cylindrique (1), un dispositif d'actionnement de freinage avec un soufflet (7) soumis à l'action d'un fluide, contre l'effort exercé par un ressort de rappel (13a, 13b) et un organe de transmission (14) situé entre dispositif d'actionnement et revêtement de freinage (16), caractérisé en ce qu'un câble, une bande, une chaîne ou similaire est prévu comme organe de transmission, qui est amené(e) autour de la garniture de freinage (16) en au moins une boucle et est fixé sur une fixation (15) mobile en va et vient, actionnée perpendiculairement à l'axe longitudinal du cylindre par le dispositif d'actionnement, en ce que le dispositif d'actionnement possède une plaque intermédiaire (9) guidée sur des boulons fixes (12a, 12b), reliée à la fixation (15) et en ce que le soufflet (7) agit sur un côté de la plaque intermédiaire (9) et en ce qu'agissent, sur l'autre côté, les ressorts de rappel conformés comme des ressorts à disques (13a, 13b).

2. Cylindre actionneur sans tige de piston selon la revendication 1, caractérisé en ce que les ressorts à disques (13a, 13b) sont bloqués sur les boulons (12a, 12b).

3. Cylindre actionneur sans tige de piston selon la revendication 1 ou 2, caractérisé en ce que le soufflet (7) est fixé à une plaque de pression (8), qui est disposée, de manière réglable, par rapport à la prise de force (2), au moyen de vis de réglage (18a, 18b).

4. Cylindre actionneur sans tige de pression selon l'une des revendications 1 à 3, caractérisé en ce que les boulons (12a, 12b) sont ancrés dans une plaque de base (6), sur laquelle s'appuient les ressorts à disques (13a, 13b), et en ce que la plaque de base (6) est positionnable à l'intérieur de la prise de force par des boulons vissés (19a, 19b), pour le réglage de la précontrainte.

5. Cylindre actionneur sans tige de piston selon l'une des revendications 1 à 4, caractérisé en ce que la prise de force (2) possède une douille de guidage (5) entourant le tube cylindrique (1), dans laquelle sont disposées des bandes de guidage (20a, 20b) s'étendant le long de la périphérie, pour l'amélioration du glissement de la prise de force (2) sur le tube cylindrique (1).

6. Cylindre actionneur sans tige de piston selon l'une des revendications 1 à 5, caractérisé en ce que la garniture de frein est composée de plusieurs corps de freinage (16) s'étendant chacun sur une partie de la périphérie du tube cylindrique (1), qui sont garnis métalliquement sur leur face externe.

# Fig. 1

0 136 436

Fig. 2